# EUROPEAN PATENT SPECIFICATION

(11) **EP 1 052 375 B1**
(45) Date of publication and mention of the grant of the patent: **12.09.2012**
(21) Application number: 00304037.5
(22) Date of filing: 12.05.2000
(51) Int. Cl.: F01D 9/04, F01D 25/12, F01D 5/18, F01D 25/10

(54) **A nozzle stage including cooling circuits and method of reducing a temperature differential in the nozzle stage**
Leitschaufelstufe beihaltend einen Kühlkreislauf sowie Verfahren zur Reduktion eines Temperaturgradienten in der Leitstufe
Aubes de guidage comprenant un circuit de refroidissement et procédé de réduction d'un gradient de température dans tel stator

(30) Priority: 14.05.1999 US 311640
(43) Date of publication of application: 15.11.2000
(73) Proprietor: GENERAL ELECTRIC COMPANY, Schenectady, NY 12345 (US)
(72) Inventor: Yu, Yufeng Phillip, Greenville, South Carolina 29615 (US); Itzel, Gary Michael, Greenville, South Carolina 29680 (US); Correia, Victor H. S., Milton Mills, New Hampshire 03852 (US)
(74) Representative: Williams, Andrew Richard

(56) References cited:
- EP-A- 0 475 102
- US-A- 4 522 557
- US-A- 5 394 687
- US-A- 5 494 402
- US-A- 5 609 466
- US-A- 5 848 876

## Description

The present invention relates generally to gas turbines having closed cooling circuits in one or more nozzle stages and particularly relates to reducing thermally induced stresses in the inner and outer bands of the nozzle stages caused by temperature differentials between the hot gases of combustion flowing along the hot gas path and the cooling medium.

In industrial or land-based gas turbines, one or more of the nozzle stages are cooled by passing a cooling medium from a plenum in each nozzle segment portion forming part of the outer band through one or more nozzle vanes to cool the nozzles and into a plenum in the corresponding inner band portion. The cooling medium then flows radially outwardly from the inner band portion, again through the one or more nozzle vanes for discharge. Typically, the cooling medium is steam. Each of the nozzle segments including the inner and outer band portions and one or more nozzle vanes are typically cast. Covers are applied to the inner and outer band portions on sides thereof remote from the hot gas path to define plenums for receiving the cooling medium. The covers are not cast with the nozzle segments. Rather, they are preferably later applied to the inner and outer band portions, for example, by welding or brazing. With this arrangement, the hot gas flowpath sides of the bands are exposed to relatively high temperatures, while the covers which are not directly exposed to the hot gases of combustion, along the flowpath, remain considerably cooler. Additionally, the covers are exposed externally to compressor discharge air which, while having a temperature higher than the temperature of the steam cooling medium is still considerably less than the temperature of the inner and outer bands exposed to the hot gases of combustion. The temperature differential between the covers and the band portions, particularly along the weld lines between the covers and walls of the band portions exposed to the hot gas path cover results in high thermal stresses. As a consequence, there is a need to reduce the thermally induced stresses along the inner and outer bands of the nozzle stages caused principally by temperature differentials between the hot gases of combustion in the hot gas path, the cooling medium flowing through the inner and outer bands, and the compressor discharge air.

EP A 0475102 discloses an apparatus and a method for minimizing differential thermal expansion of gas turbine vane structures.

According to the present invention there is provided a nozzle stage as defined in appended claim 1.

In accordance with a preferred embodiment of the present invention, the temperature difference of the flowpath exposed surfaces of the inner and outer bands and the covers exposed to both the cooling medium and the compressor discharge air is reduced by flowing a thermal medium along the covers at a temperature intermediate the temperature of the hot gases of combustion and the cooling medium through the cover and particularly adjacent the joints between the covers and the nozzle bands. The thermal medium flowing along the covers is at a significantly higher temperature than the temperatures of the cooling medium and the compressor discharge air in order to heat the cover so that the cover temperature approaches the bulk temperature of the flowpath exposed surfaces of the nozzle bands. To provide such thermal medium, a portion of the combustion path gases is directed through entry ports at the leading edges of the cover. Those gases follow passages through the cover and distribute heat substantially evenly to the cover for exit at the trailing edges of the covers into the hot gas path. Because of their very high temperature, flowpath gases alone can cause damage to the cover by way of oxidation, elevation of the bulk temperature of the covers in excess of that of the flowpath surfaces, and a reverse temperature gradient, resulting in similar high thermal stresses. To optimize the temperature of the thermal medium flowing through the heating passages in the covers, hot gases of combustion are combined with high pressure compressor discharge air for flow through the one or more passages in the cover. By providing one or more metering apertures in communication with compressor discharge air and with the passage(s) through the covers, hot flowpath gases entering the passage(s) are combined with compressor discharge air. This results in a thermal medium having a temperature sufficiently high to heat the cover adequately to reduce thermal stresses while avoiding the aforementioned and other problems.

Also, and advantageously, the mixture of hot combustion gases and compressor discharge air is (i) lower in pressure than both the compressor discharge air and hot gases of combustion at the leading edge of the passages and (ii) higher than the pressure of the hot gases of combustion at the trailing edge of the cover. Thus, the cooling medium flows passively through the passages between the leading edges to the trailing edges of the nozzle segments. The result is a cover having a temperature very close to the bulk temperature of the hot gas flowpath surfaces, thus reducing the thermal stresses induced by the thermal mismatch and affording higher component life and more reliable joints.

An embodiment of the invention will now be described, by way of example, with reference to the accompanying drawings, in which:
FIGURE 1 is a fragmentary cross-sectional view illustrating a nozzle stage for a gas turbine incorporating the present invention;
FIGURE 2 is an enlarged fragmentary cross-sectional view illustrating a leading edge of the inner band portion of a nozzle segment;
FIGURES 3 and 4 are perspective schematic illustrations of covers for the inner or outer band segments; and
FIGURE 5 is a fragmentary cross-sectional view of an inner band segment portion illustrating the thermal medium passages.

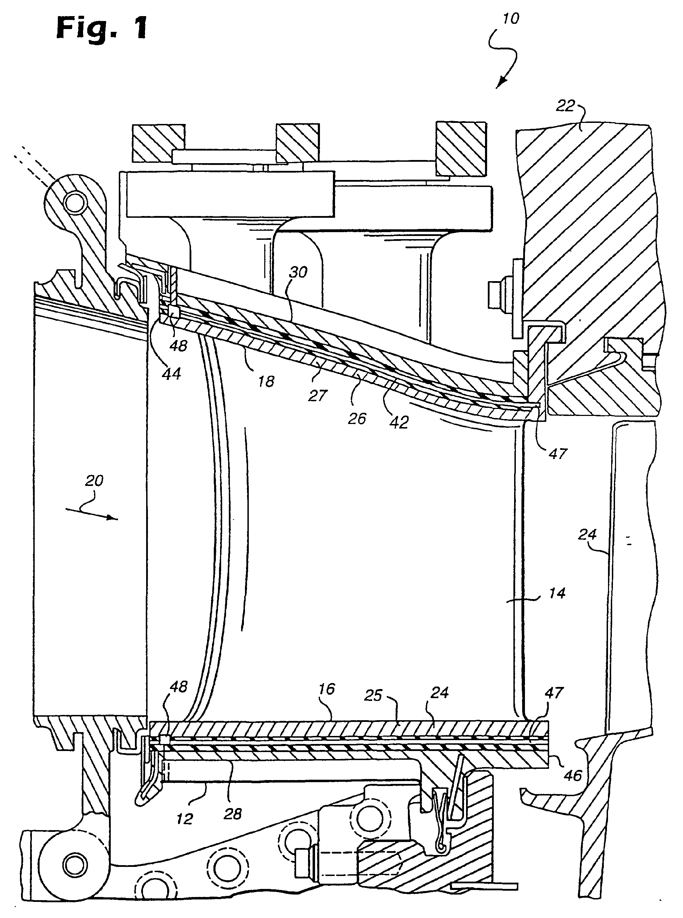

Referring now to the drawings, particularly to Figure 1, there is illustrated a nozzle stage, generally designated 10, comprised of a plurality of nozzle segments arranged circumferentially about the axis of the turbine. Each of the nozzle segments 12 includes one or more nozzle vanes 14 disposed between inner and outer band portions 16 and 18, respectively. It will be appreciated that the inner and outer band portions 16 and 18 and nozzle vanes 14 define a flowpath for hot gases of combustion flowing in the direction of the arrow 20. The nozzle segments are circumferentially arrayed about the turbine axis and secured to a fixed shell 22. Additionally illustrated in Figure 1 is one of a plurality of circumferentially spaced buckets 24 forming part of the rotor of the turbine, it being appreciated that the hot gases of combustion flow through the buckets and rotate the rotor.

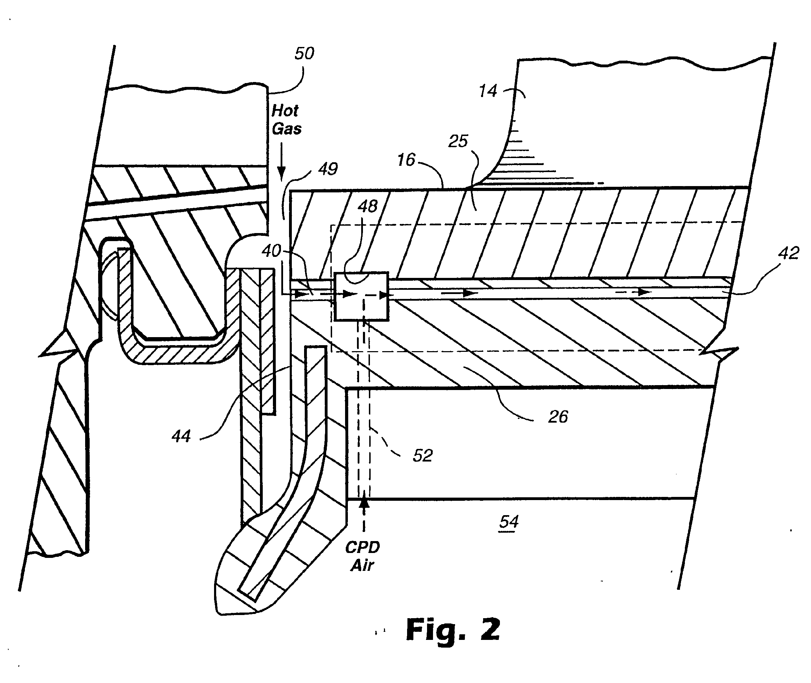

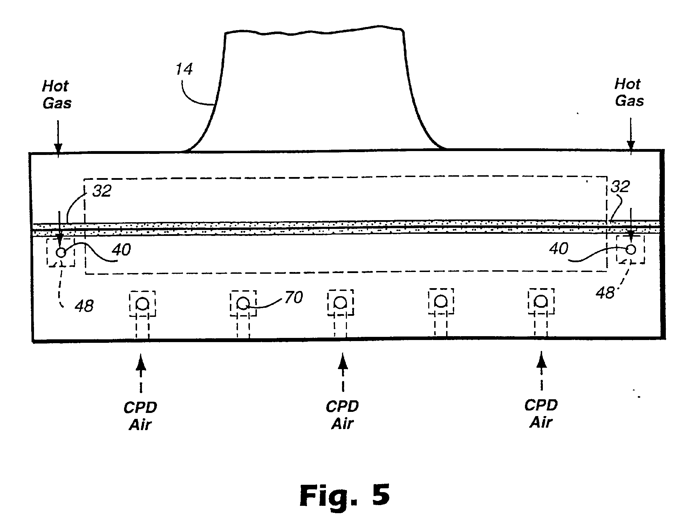

The inner and outer band portions 24 and 26, respectively, are comprised of inner and outer walls 25 and 27, respectively, exposed to the hot gases of combustion in flowpath 20 and inner and outer covers 28 and 30. The covers define with the walls plenums P for receiving a cooling medium, one plenum P being illustrated in Figure 2 by the dashed lines. Particularly, the cooling medium is supplied to the outer wall plenum for impingement cooling of the radial outer band portion and for flow through the vane 14 into a plenum in the inner band portion. The cooling medium flows into the latter plenum for impingement cooling of the inner band wall and for discharge through radially outwardly extending passages through the vane 14 for return. It will be appreciated that the nozzle segment may be cast, for example, from a nickel alloy material. The covers 28 and 30 are secured to the walls of the cast nozzle segments to define the plenums, preferably by welded or brazed joints 32, illustrated in Figure 5. Referring back to Figure 1, the walls of the inner and outer band portions are, of course, exposed to the high temperature of the hot gases of combustion flowing along the flowpath 20, while the covers 28 are exposed to compressor discharge air on sides thereof remote from the walls. The compressor discharge air is, of course, at a lower temperature than the hot gases of combustion. Additionally, the cooling medium supplied to the nozzle via the plenums is at a temperature intermediate the temperature of the compressor discharge air and the hot gases flowing along flowpath 20. As noted previously, this causes a thermal mismatch between the cover and the inner and outer band portions, causing thermal stresses in the inner and outer band segments. The present invention minimizes or eliminates those thermal stresses by elevating the temperature of the cover to a temperature closer to the temperature of the inner and outer walls and intermediate the bulk temperature of the walls and the temperature of the cooling medium.

To accomplish the foregoing, and referring to Figures 1 and 2, each cover has at least one passage and preferably a pair of passages 42 extending from its leading edge to its trailing edge for flowing a thermal, i.e., a heating medium to heat the cover and raise its temperature to approximate the bulk temperature of the wall. Referring to Figure 2 and the inner band portion 16, the cover 26 includes at least one entry port 40 to each passage 42 which extends between the leading and trailing edges 44 and 46, respectively, of the cover to an exit port 47. A mixing chamber 48 is disposed in each passage 42 adjacent the leading edge 44. As best illustrated in Figure 2, a slot 49 is formed between the leading edge of the nozzle segment and the adjoining structure 50 to permit passage of hot gases flowing along the hot gas path to enter the entry port 40 of the passage 42. Additionally, a passage 52 extends through the cover and lies in communication at respective opposite ends with the mixing chamber 48 and an area 54 containing compressor discharge air. Consequently, both hot gases of combustion and compressor discharge air are supplied to the mixing chamber 48 and mixed to provide a thermal medium having a temperature sufficient to raise the temperature of the cover to approximate the bulk temperature of the wall.

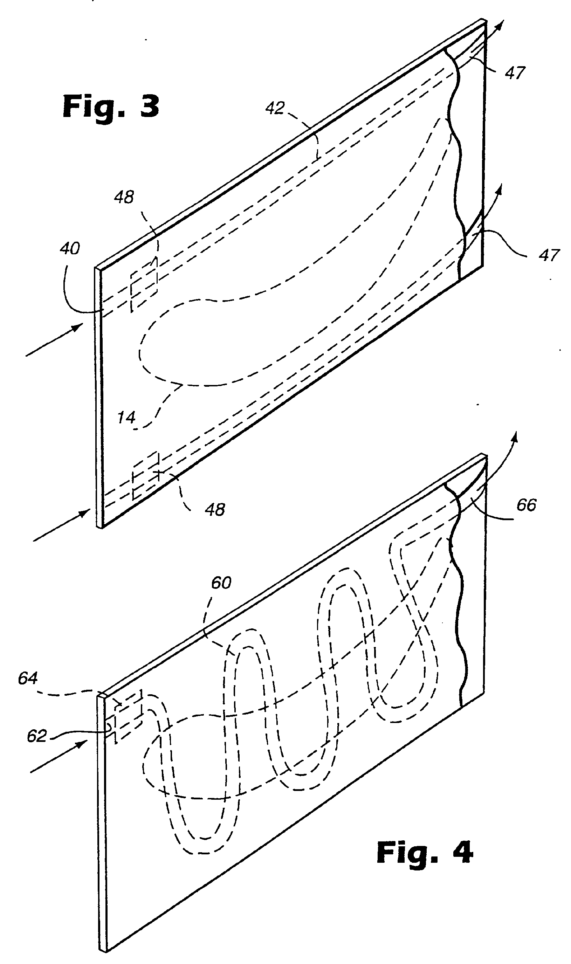

As best illustrated in Figures 3 and 5, an entry port 40 and passage 42 are located directly adjacent each joint between the cover and the wall along opposite sides of the cover. Additional passages 42, entry ports 40, mixing chambers 48 and exit ports 47 may also be provided through the covers from their leading edges to their trailing edges between the opposite sides of the covers. These additional passages therefore similarly heat the cover between opposite sides thereof, with the mixture of hot combustion gases and compressor discharge air. Referring to Figures 3 and 4, there is schematically illustrated a pair of covers which are useful with either the inner or outer band portions. In Figure 3, for example, the inner cover 28 includes the passages 42 adjacent opposite side edges, the outline of the vane 14 being superimposed by the dashed lines on the illustrated cover. It will be seen that the exit port 47 of each passage 42 is angled at substantially the same angle as the hot gases of combustion flow from the trailing edge of the vane. It will be appreciated that the passages 42 illustrated in Figure 3 lie along opposite sides of the cover directly adjacent the joints between the covers and the band portion 16.

In Figure 4, the entirety of the cover is heated by the mixed hot gases of combustion and compressor discharge air. In this form, a serpentine passage 60 is provided through the cover. As in the prior embodiment, the entry port 62 directs hot gases of combustion into the mixing chamber 64. The combined hot gases and compressor discharge air then flow along passage 60 and into the hot gas stream via exit port 66. The exit port 66 is angled at substantially the same angle as the angle of the trailing edge of the vane so that the exiting thermal medium flows in substantially the same direction as the hot gases of combustion leaving the trailing edge of the vane.

It will be appreciated that the radial outer band portion is similarly configured as the inner band portion just described. That is, the outer band portion similarly includes entry ports adjacent opposite sides of the outer band portion in communication with mixing chambers adjacent the leading edge for mixing compressor discharge air and hot gases of combustion for flow through passages along the opposite edges of the cover and into the hot gas path adjacent the trailing edge of the outer cover.

From the foregoing, it will be appreciated that the temperature of the covers is heated by the mixture of the hot gases of combustion and compressor discharge air to a temperature which heats the covers to approximate the bulk temperature of the wall of the inner or outer band portions. Consequently, the temperature differential between the covers and the inner and outer wall band portions is substantially reduced sufficiently to minimize or eliminate thermal stresses. It will also be appreciated that a substantial number of passages may be disposed through each of the covers, substantially paralleling the pair of passages along opposite sides of the covers. For example, as illustrated in Figure 5, the entry apertures for flowing hot gases of combustion into a plurality of mixing chambers within the cover and mixing the hot gases of combustion with compressor discharge air via passages 70 is illustrated. Thus, the entirety of the cover can be heated. Also, the pressure of the hot gases of combustion and compressor discharge air at the leading edge is greater than the pressure of the flowpath at the trailing edge. In this manner, the flow of the mixed gases does not require pumping and the gases flow passively to heat the covers.

## Claims

1. A nozzle stage (10) comprising turbine nozzles having inner and outer bands (16, 18) including cooling circuits for flowing a cooling medium, the nozzle stage (10) further comprising:
a nozzle segment (12) having at least one nozzle vane (14) and inner and outer nozzle band portions (24, 26) adjacent opposite ends of said nozzle vane (14) and in part defining a path for flowing hot gases of combustion;
one of said band portions (24) forming a wall (25) exposed to said hot gas path of a turbine containing the turbine nozzles and having a cover (28) on a side of said wall (25) remote from said hot gas path, said cover (28) and said wall (25) defining a plenum (P) therebetween for receiving the cooling medium forming part of a cooling circuit;
said segment (12) including at least one passage (42) separate from and not in communication with said plenum (P) and extending alone and through said cover (28) along a length of said segment (12) from adjacent a leading edge to a trailing edge thereof and in the direction for flowing the hot gases of combustion through the segment for flowing a thermal medium at a temperature intermediate the temperature of the cooling medium receivable in said plenum (P) and the hot gases of combustion to reduce the temperature differential between said cover (28) and said wall (25) and thereby reduce thermal-induced stresses in said one band portion (24); **characterized by**:
the passage (42) comprising a mixing chamber (48) disposed adjacent the leading edge (44), and wherein a passage (52) extends through the cover (28) and lies in communication at respective opposite ends with the mixing chamber (48) and an area (54) containing compressor discharge air.

2. The nozzle stage (10) according to claim 1 wherein said one passage (42) lies in communication with the hot gases of combustion flowing along said flowpath.

3. The nozzle stage (10) according to claim 1 wherein said one passage (42) lies in communication with compressor discharge air (CPD) on a side of said cover (28) opposite said wall (25).

4. The nozzle stage (10) according to claim 1 wherein said one passage (42) lies in communication with the hot gases of combustion and compressor discharge air on a side of said cover (28) opposite said wall (25).

5. The nozzle stage (10) according to claim 1 wherein said cover (28) and said wall (25) of said one band portion (24) form joints (32) therebetween along opposite sides of said segment (12), said one passage (42) extending adjacent one said joint (32) along one side of said segment (12) and a second passage extending adjacent a second joint along said opposite side of said segment (12) for flowing said thermal medium thereby to reduce the temperature differential between said cover (28) and said wall (25) along said joints (32).

6. A method of reducing a temperature differential in the nozzle stage (10) of any preceding claim including the steps of:
flowing a thermal medium through at least one passage (42) in said cover (28, 30) separate from and not in communication with said plenum (P) at a temperature intermediate respective temperatures of said hot gases of combustion and said cooling medium to elevate the temperature of the cover (28, 30); **characterised by**:
mixing hot gases of combustion and compressor discharge air in the mixing chamber (48) adjacent the leading edge of the wall (25, 27) to form the thermal medium and flowing the mixture from adjacent said leading edge along said passage (42) to the trailing edge of said wall (25, 27).

7. The method according to claim 6 including flowing hot gases of combustion through said passage (42).

8. The method according to claim 6 including flowing compressor discharge air through said passage (42).

9. The method according to claim 6 including flowing hot gases of combustion and compressor discharge air through said passage (42).

10. The method according to claim 6 including extending said passage (42) in a serpentine manner between opposite sides of said segment (12) and between leading and trailing edges thereof.

11. The method according to claim 6 including a joint (32) between said cover (28, 30) and said wall (25, 27) along opposite sides of said segment (12), and forming a pair of passages adjacent said joint (32) and flowing the thermal medium through said pair of passages adjacent said joints (32).

## Patentansprüche

1. Leitapparatstufe (10), die Turbinenleitapparate mit inneren und äußeren Bändern (16, 18) aufweist, die Kühlkreise für einen Durchfluss eines Kühlmediums enthalten, wobei die Leitapparatstufe (10) ferner aufweist:
ein Leitapparatsegment (12) mit wenigstens einer Leitapparatschaufel (14) und inneren und äußeren Leitapparatbandabschnitten (24, 26) angrenzend an gegenüberliegende Enden der Leitapparatschaufel (14) und die zum Teil einen Pfad für einen Durchfluss heißer Verbrennungsgase definieren;
wobei einer von den Bandabschnitten (24) eine Wand (25) ausbildet, die dem Heißgaspfad einer die Turbinenleitapparate enthaltenden Turbine ausgesetzt ist, und eine Abdeckung (28) auf einer von dem Heißgaspfad entfernten Seite der Wand (25) hat, wobei die Abdeckung (28) und die Wand (25) einen Sammelraum (P) dazwischen zur Aufnahme des einen Teil eines Kühlkreises bildenden Kühlmediums definieren;
wobei das Segment (12) wenigstens einen Durchlass (42) getrennt von und nicht in Verbindung mit dem Sammelraum (P) enthält und der sich alleine und durch die Abdeckung (28) hindurch entlang einer Länge des Segmentes (12) von einer Nähe zu seiner Vorderkante bis zur Hinterkante und in der Richtung für einen Durchfluss der heißen Verbrennungsgase durch das Segment hindurch erstreckt, um ein Wärmemedium bei einer Temperatur zwischen der Temperatur des in dem Sammelraum (P) aufnehmbaren Kühlmediums und der der heißen Verbrennungsgase strömen zu lassen, um die Temperaturdifferenz zwischen der Abdeckung (28) und der Wand (25) zu reduzieren und dadurch wärmeinduzierte Spannungen in dem einen Bandabschnitt (24) zu reduzieren; **dadurch gekennzeichnet, dass**:
der Durchlass (42) eine Mischkammer (48) aufweist, die angrenzend an die Vorderkante (44) angeordnet ist, und wobei sich ein Durchlass (52) durch die Abdeckung (28) hindurch erstreckt und an entsprechenden gegenüberliegenden Enden mit der Mischkammer (48) und einem Verdichterauslassluft enthaltenden Bereich (54) in Verbindung steht.

2. Leitapparatstufe (10) nach Anspruch 1, wobei der eine Durchlass (42) mit den entlang dem Strömungspfad strömenden heißen Verbrennungsgasen in Verbindung steht.

3. Leitapparatstufe (10) nach Anspruch 1, wobei der eine Durchlass (42) mit Verdichterauslassluft (CPD) auf einer der Wand (25) gegenüberliegenden Seite der Abdeckung (28) in Verbindung steht.

4. Leitapparatstufe (10) nach Anspruch 1, wobei der eine Durchlass (42) mit den heißen Verbrennungsgasen und der Verdichterauslassluft auf einer der Seitenwand (25) gegenüberliegenden Seite der Abdeckung (28) in Verbindung steht.

5. Leitapparatstufe (10) nach Anspruch 1, wobei die Abdeckung (28) und die Seitenwand des einen Bandabschnittes (24) Verbindungsstellen (32) dazwischen entlang gegenüberliegenden Seiten des Segmentes (12) ausbilden, wobei sich der eine Durchlass (42) angrenzend an die eine Verbindungsstelle (32) entlang einer Seite des Segmentes (12) erstreckt und sich ein zweiter Durchlass angrenzend an eine zweite Verbindungsstelle entlang der gegenüberliegenden Seite des Segmentes (12) für einen Durchfluss des Wärmemediums erstreckt, um die Temperaturdifferenz zwischen der Abdeckung (28) und der Wand (25) entlang den Verbindungsstellen (32) zu reduzieren.

6. Verfahren zum Reduzieren einer Temperaturdifferenz in der Leitapparatstufe (10) nach einem der vorstehenden Ansprüche mit den Schritten:
Durchströmenlassen eines Wärmemediums durch wenigstens einen Durchlass (42) in der Abdeckung (28, 30) getrennt von dem und nicht in Verbindung mit dem Sammelraum (P) bei einer Temperatur zwischen entsprechenden Temperaturen der heißen Verbrennungsgase und dem Kühlmedium, um die Temperatur der Abdeckung (28, 30) anzuheben; **gekennzeichnet durch**:
Mischen von heißen Verbrennungsgasen und Verdichterauslassluft in der Mischkammer (48) angrenzend an die Vorderkante der Wand (25, 27), um ein Wärmemedium zu erzeugen und das Gemisch von der Nähe der Vorderkante entlang des Durchlasses (42) zu der Hinterkante der Wand (25, 27) strömen zu lassen.

7. Verfahren nach Anspruch 6 einschließlich des Schrittes, heiße Verbrennungsgase durch den Durchlass (42) strömen zu lassen.

8. Verfahren nach Anspruch 6 einschließlich des Schrittes, Verdichterauslassluft durch den Durchlass (42) strömen zu lassen.

9. Verfahren nach Anspruch 6 einschließlich des Schrittes, heiße Verbrennungsgase und Verdichterauslassluft durch den Durchlass (42) strömen zu lassen.

10. Verfahren nach Anspruch 6 einschließlich des Schrittes, den Durchlass (42) in einer serpentinenartigen Weise zwischen gegenüberliegenden Seiten des Segmentes (12) und zwischen dessen Vorder- und Hinterkanten zu verlängern.

11. Verfahren nach Anspruch 6, das eine Verbindungsstelle (32) zwischen der Abdeckung (28, 30) und der Wand (25, 27) entlang gegenüberliegenden Seiten des Segmentes (12) beinhaltet und ein Paar von Durchlässen angrenzend an die Verbindungsstelle (32) ausbildet und das Wärmemedium durch das Paar der an die Verbindungsstellen (32) angrenzenden Durchlässe strömen lässt.

## Revendications

1. Etage de distributeur (10), comportant des aubes directrices présentant des anneaux intérieurs et extérieurs (16, 18) comprenant des circuits de refroidissement pour l'écoulement d'un fluide de refroidissement, l'étage de distributeur (10) comprenant en outre :
un segment d'aube (12) présentant au moins une aube fixe (14) et des portions d'anneau d'aube intérieure et extérieure (24, 26) adjacentes aux extrémités opposées de ladite aube fixe (14) et définissant en partie un chemin d'écoulement pour les gaz de combustion chauds;
l'une desdites portions d'anneau (24) formant une paroi (25) exposée audit chemin des gaz chauds d'une turbine comportant les aubes directrices, et présentant un couvercle (28) sur un côté de ladite paroi (25), éloigné dudit chemin des gaz chauds, ledit couvercle (28) et ladite paroi (25) définissant une chambre collectrice (P) entre eux, en vue de recevoir le fluide de refroidissement faisant partie d'un circuit de refroidissement;
ledit segment (12) comprenant au moins un passage (42) séparé de ladite chambre collectrice (P), sans communication avec celle-ci, et s'étendant seul et à travers ledit couvercle (28), sur une longueur dudit segment (12), depuis un emplacement adjacent à un bord d'attaque et jusqu'à un bord de fuite du segment, et dans le sens d'écoulement des gaz de combustion chauds à travers le segment, en vue de faire circuler un fluide thermique à une température intermédiaire entre la température du fluide de refroidissement, pouvant être reçu dans ladite chambre collectrice (P), et des gaz de combustion chauds, afin de réduire la différence de température entre ledit couvercle (28) et ladite paroi (25) et réduire ainsi les contraintes causées par un phénomène thermique dans ladite portion d'anneau (24); **caractérisé en ce que** :
le passage (42) comprend une chambre de mélange (48) disposée de façon adjacente au bord d'attaque (44), et dans lequel un passage (52) s'étend à travers le couvercle (28) et est en communication, à des extrémités opposées respectives, avec la chambre de mélange (48) et une zone (54) contenant de l'air de sortie de compresseur.

2. Etage de distributeur (10) selon la revendication 1, dans lequel ledit passage (42) est en communication avec les gaz de combustion chauds s'écoulant le long du chemin d'écoulement.

3. Etage de distributeur (10) selon la revendication 1, dans lequel ledit passage (42) est en communication avec l'air de sortie de compresseur (CPD), sur un côté dudit couvercle (28) qui est opposé à ladite paroi (25).

4. Etage de distributeur (10) selon la revendication 1, dans lequel ledit passage (42) est en communication avec les gaz de combustion chauds et l'air de sortie de compresseur, sur un côté dudit couvercle (28) qui est opposé à ladite paroi (25).

5. Etage de distributeur (10) selon la revendication 1, dans lequel ledit couvercle (28) et ladite paroi (25) de ladite portion d'anneau (24) forment entre eux des joints (32), le long de côtés opposés dudit segment (12), ledit passage (42) s'étendant de façon adjacente à l'un desdits joints (32), le long d'un côté dudit segment (12), et un deuxième passage s'étendant de façon adjacente à un deuxième joint, le long dudit côté opposé dudit segment (12), en vue de l'écoulement dudit fluide thermique, en réduisant ainsi la différence de température entre ledit couvercle (28) et ladite paroi (25), le long desdits joints (32).

6. Procédé de réduction d'une différence de température dans l'étage de distributeur (10) selon l'une quelconque des revendications précédentes, comprenant les étapes suivantes :
faire circuler un fluide thermique à travers au moins un passage (42) dans ledit couvercle (28, 30), séparément et sans communication avec ladite chambre collectrice (P), à une température intermédiaire entre les températures respectives desdits gaz de combustion chauds et dudit fluide de refroidissement, afin d'élever la température du couvercle (28, 30); **caractérisé par** :
le mélange des gaz de combustion chauds et de l'air de sortie de compresseur dans la chambre de mélange (48) adjacente au bord d'attaque de la paroi (25, 27) pour former le fluide thermique et faire circuler le mélange depuis ledit bord d'attaque adjacent, le long dudit passage (42), jusqu'au bord de fuite de ladite paroi (25, 27).

7. Procédé selon la revendication 6, comprenant l'écoulement des gaz de combustion chauds dans ledit passage (42).

8. Procédé selon la revendication 6, comprenant l'écoulement de l'air de sortie de compresseur dans ledit passage (42).

9. Procédé selon la revendication 6, comprenant l'écoulement des gaz de combustion chauds et de l'air de sortie de compresseur dans ledit passage (42).

10. Procédé selon la revendication 6, comprenant le prolongement dudit passage (42) à la manière d'un serpentin entre des côtés opposés dudit segment (12) et entre les bords d'attaque et de fuite de celui-ci.

11. Procédé selon la revendication 6, comprenant un joint (32) entre ledit couvercle (28, 30) et ladite paroi (25, 27), le long de côtés opposés dudit segment (12), et la formation d'une paire de passages adjacents audit joint (32), et la mise en circulation du fluide thermique à travers ladite paire de passages adjacents auxdits joints (32).
